# EUROPÄISCHE PATENTSCHRIFT

(11) **EP 2 390 737 B1**
(45) Veröffentlichungstag und Bekanntmachung des Hinweises auf die Patenterteilung: **04.05.2016**
(21) Anmeldenummer: 11004257.9
(22) Anmeldetag: 24.05.2011
(51) Int. Cl.: G05B 19/401

(54) **Verfahren zur Maschinenvermessung**
Method for machine measurement
Procédé de mesurage de machines

(30) Priorität: 28.05.2010 DE 102010021839
(43) Veröffentlichungstag der Anmeldung: 30.11.2011
(73) Patentinhaber: Dörries Scharmann Technologie GmbH, 41236 Mönchengladbach (DE)
(72) Erfinder: Kahle, Lüder, 41747 Viersen (DE); Loose, Reinhold, 41844 Wegberg (DE); Mirbach, Hermann J., 41844 Wegberg (DE); Troup, Thomas, 52511 Geilenkirchen (DE)
(74) Vertreter: Rumrich, Gabriele

(56) Entgegenhaltungen:
- EP-A2- 0 504 691
- EP-A2- 1 308 239
- EP-B1- 1 092 125
- EP-B1- 1 147 367
- WO-A1-2009/030585
- US-A1- 2005 172 506

## Beschreibung

Die vorliegende Erfindung betrifft ein Verfahren zur Maschinenvermessung einer NC-Bearbeitungsmaschine gemäß Anspruch 1, ein System zur Maschinenvermessung gemäß Anspruch 9 sowie eine Verwendung des obigen Systems zur Werkstüekvermessung gemäß Anspruch 15.

In den letzten Jahren sind die Genauigkeitsanforderungen an Bearbeitungsmaschinen ständig gestiegen. Vor diesem Hintergrund kommt der Maschinenvermessung heute eine große Bedeutung zu. Dies betrifft sowohl die Maschinenvermessung beim Einrichten der Bearbeitungsmaschine sowie die regelmäßige Überwachung der Maschinengenauigkeit über die gesamte Lebensdauer der Bearbeitungsmaschine.

Zur Maschinenvermessung sind zahlreiche Verfahren bekannt geworden (Fachbuch " Werkzeugmaschinen - Messtechnische Untersuchung und Beurteilung", Manfred Weck, 6. Auflage, 2001, Springer-Verlag, Kapitel 3 "Geometrisches und kinematisches Verhalten von Werkzeugmaschinen").

Die bekannten Verfahren beruhen zu einem wesentlichen Teil auf der Nutzung von Laser-Interferometern zur Vermittlung von Positionierabweichungen, Geradheitsabweichungen, Winkelabweichungen o. dgl..

Ein weiteres bekanntes Verfahren zur Maschinenvenvermessung (WO 2009/030585 A1), zeigt eine Vertikal-Bearbeitungsmaschine mit einem permanent installierten Laserstrahlerzeuger, dessen Messstrahl durch die Spindeleinheit hindurchläuft. Hierfür ist die Spindel als Hohlspindel ausgebildet, so dass der Mcssstrahl zur Maschinenvermessung durch die Spindel hindurchtreten kann.

Separat von dem einen Strahlerzeuger sind Strahldetektoren vorgesehen, die am Maschinenbett bzw. am Maschinentisch festgelegt sind.

Sowohl der Strahlerzeuger als auch die Strahldetektoren sind permanent in der Bearbeitungsmaschine installiert. Dies eröffnet grundsätzlich die Möglichkeit einer automatisierten Maschinenvermessung, ohne dass manuell irgendwelche Messautbauten eingerichtet werden müssen.

Das bekannte Verfahren ist für eine dreiachsige Vertikalmaschine vorgesehen, so dass der Messstrahl stets in der Vertikalen liegt. Um Messungen in der Horizontalen durchzuführen, muss mit einem Umlenkspiegel gearbeitet werden, der über die Werkzeugschnittstelle eingewechselt werden kann. Hier zeigt sich, dass das bekannte Verfahren hinsichtlich der realisierbaren Messaufgaben beschränkt ist. Beispielsweise lässt sich eine volumetrische Messung mit der üblichen Diagonalmessung nur über zusätzliche Strahldetektoren realisieren. Das führt zu einer kosten- und wartungsintensiven Anordnung.

Schließlich ist bei dem bekannten Verfahren nachteilig, dass der permanent installierte Laserstrahlerzeuger stets den zuweilen rauen Randbedingungen im Arbeitsraum ausgesetzt ist. Vibrationen, Verschmutzungen und Feuchtigkeit lassen auch hier einen hohen Wartungsaufwand erwarten.

Aus der Druckschrift EP 1 092 125 B1 ist eine Vektormesstechnik für ein Koordinatenmessgerät bekannt, die ermöglicht, dass die Bewegungsfehlerkomponenten genauer und effizienter bestimmt werden und die auch für eine Werkzeugmaschine einsetzbar sein kann. Dazu wird ein Strahl von reflektierbarer Energie in eine Richtung geleitet, die zu der Bewegungsrichtung des Körpers entlang der Bahnen, die Mcsspunkte aufweisen, nicht parallel ist. Ein Reflektor reflektiert die Energie zurück zu einer Messvorrichtung, die die Distanz zwischen der Vorrichtung und dem Reflektor an diesen unterschiedlichen Messpunkten misst. Dabei kann die dafür verwendete Laservorrichtung von der Werkzeugmaschinenspindel getragen werden. Der entscheidende Nachteil dieser Lösung besteht darin, dass die Werkzeugspindel in der Maschine verbleibt und dass die Werkzeugmaschinenspindel die Laservorrichtung aufnimmt. Dadurch summieren sich die Einzelfehler zum einen der Spindelaufnahme in der Maschine und der Aufnahme der Laservorrichtung anstelle des Werkzeuges in der Spindel. Dies wirkt sich insgesamt negativ auf die Steifigkeit und Robustheit sowie auf das Messergebnis aus.

Es ist weiterhin aus EP 0 504 691 A1 eine Mess- und Verarbeitungsstation bekannt, mit welcher ein wechselseitiges Messen und Bearbeiten von Konturen an Werkstücken realisierbar ist. Bei dieser Lösung werden in einer Koordinatenmeßmaschine zusätzlich zu den Messköpfen Gelenkfräsköpfe eingesetzt.

Dazu wird eine Pinole verwendet, welche verschiedene Knöpfe aufnehmen kann. Die Pinole kann mit auswechselbaren Tastköpfen bestückt werden, sowie mit einem Werkzeug.
In der Druckschrift US 2005/0712506A1 wird eine Lösung zur Übertragung von Energie oder Daten innerhalb einer Maschine, beispielsweise einer Werkzeugmaschine beschrieben, wobei die Energie oder Daten zu einem in einer Spindel aufgenommenen Bauteil übertragen werden. Dabei verbleibt die Spindel ebenfalls in der Maschine und weist eine oder mehrere Schnittstellen auf, die ein Auswechseln der Bauteile erlauben. Das in der Spindel aufgenommene Bauteil kann ein Werkzeug oder eine Lasersonde sein.
Die beiden vorgenannten Lösungen sind nicht zur Maschinenvermessung vorgesehen und geeignet.

Es darf der Vollständigkeit halber noch darauf hingewiesen werden, dass zur Maschinenvermessung auch sogenannte "Laser-Tracker" bekannt sind. Ein solcher Laser-Tracker ist mit einem Laser-Interferometer ausgestattet, der auf einem Träger angeordnet ist. Der Träger weist zur Positionierung des Laser-Interferometers zwei orthogonal zueinander angeordnete NC-Schwenkachsen auf. Durch eine geeignete Sensoranordnung kann das Laser-Interferometer einem Reflektor nachgeführt werden, der in die Werkzeugaufnahme einer Bearbeitungsmaschine eingesetzt ist. Aus den gemessenen Entfernungen und den jeweils eingestellten Schwenkwinkeln lässt sich die absolute Position des Maschinenkopfs der Bearbeitungsmaschine sehr genau bestimmen. Nachteilig insbesondere im Hinblick auf die beiden zusätzlichen NC-Schwenkachsen ist der hohe konstruktive Aufwand.

Der Erfindung liegt das Problem zugrunde, das bekannte Verfahren derart auszugestalten und weiterzubilden, dass eine hohe Flexibilität in der Maschinenvermessung bei hoher Robustheit und geringen Kosten realisierbar ist.

Das obige Problem wird durch ein Verfahren mit den Merkmalen von Anspruch 1 gelöst.

Das vorschlagsgemäße Verfahren ist ausgelegt auf eine NC-Bearbeitungsmaschine mit einem Maschinenkopf, dem eine mechanische sowie elektrische Spindel-Wechselschnittstelle zur Aufnahme einer Motorspindel zugeordnet ist.

Es ist nun erkannt worden, dass die Nutzung der Spindel-Wechselschnittstelle für die Anbringung des Laser-Interferometers eine Reihe von zum Teil unerwarteten Vorteilen mit sich bringt.

Vorschlagsgemäß wird das Laser-Interferometer über die ohnehin vorhandene Spindel-Wechselschnittstelle eingewechselt, wenn die Maschinenvermessung durchgeführt werden soll.

Vorteilhaft bei der Nutzung der Spindel-Wechselschnittstelle für das Einwechseln des Laser-Interferometers ist die Tatsache, dass die Spindel-Wechselschnittstelle nicht nur eine mechanische Schnittstelle, sondern auch eine elektrische Schnittstelle ist. Damit kann der elektrische Teil der Schnittstelle vorzugsweise auch für das Laser-Interferometer Anwendung finden.

Mit dem Einwechseln des Laser-Interferometers über die Spindel-Wechselschnittstelle lassen sich alle Bewegungs-Freiheitsgrade der Bearbeitungsmaschine zum Ausrichten des Laser-Interferometers für die Laser-Interferenzmessungen nutzen. Der Begriff "Ausrichten des Laser-Interferometers" steht dabei für das Ausrichten des Meßstrahls des Laser-Interferometers. In besonders bevorzugter Ausgestaltung umfaßt das Ausrichten in obigem Sinne nicht nur eine Parallelverschiebung des Meßstrahls, sondern auch eine Änderung der Winkellage des Meßstrahls im Raum (Anspruch 2).

Insbesondere geht mit der vorschlagsgemäßen Anordnung des Laser-Interferometers die Möglichkeit einher, das Laser-Interferometer - jedenfalls auch - mit einer NC-Schwenkachse oder mit zwei oder mehreren NC-Schwenkachsen des Maschinenkopfes in obigem Sinne auszurichten (Anspruch 3). Interessant hierbei ist die Tatsache, dass mit der Nutzung solcher NC-Schwenkachsen auf Umlenkspiegel ganz verzichtet werden kann.

Die vorschlagsgemäße Lösung ermöglicht die Durchführung einer nahezu unbegrenzten Anzahl von Meßaufgaben bei einfachem und damit robustem Aufbau durch die Doppelnutzung bereits vorhandener Komponenten wie der Spindel-Wechselschnittstelle und der natürlich der Maschinenachsen.

Eine mit dem vorschlagsgemäßen Verfahren durchführbare Meßaufgabe ist Gegenstand von Anspruch 5. Sie umfaßt eine volumetrische Messung basierend auf der Vermessung von Raumdiagonalen gemäß ISO 230-6.

Eine andere vorteilhafte Meßaufgabe ist Gegenstand von Anspruch 6. Hier arbeitet die Bearbeitungsmaschine gewissermaßen nach Art eines Laser-Trackers, wobei die Ausrichtung des Laser-Interferometers auf eine Meßoptik, hier insbesondere auf einen Reflektor, sensorbasiert nachgeregelt wird. Besonders vorteilhaft ist hier die Tatsache, dass die ohnehin vorhandenen Maschinenachsen für die fortlaufende Ausrichtung des Laser-Interferometers genutzt werden. Diese erneute Doppelnutzung von Komponenten führt selbstredend zu einer besonders hohen Kosteneffizienz.

Die weiter bevorzugten Ausführungsbeispiele gemäß den Ansprüchen 7 und 8 betreffen die Ausstattung der Bearbeitungsmaschine mit einer Parkstation, so dass das Einwechseln des Laser-Interferometers automatisiert nach Art eines Spindelwechsels erfolgen kann. Damit ist grundsätzlich eine vollautomatische Durchführung der Maschinenvermessung möglich.

Nach einer weiteren Lehre gemäß Anspruch 9, der eigenständige Bedeutung zukommt, wird ein System zur Maschinenvermessung einer NC-Bearbeitungsmaschine beansprucht.

Bei dem vorschlagsgemäßen System handelt es sich um eine obige Bearbeitungsmaschine, in dessen Spindel-Wechselschnittstelle das Laser-Interferometer wie oben erläutert eingewechselt ist. Letztlich handelt es sich hierbei um eine Bearbeitungsmaschine, die durch das Einwechseln des Laser-Interferometers und die Umsetzung des obigen, vorschlagsgemäßen Verfahrens in eine Meßmaschine umgewandelt worden ist.

Auf alle Ausführungen zu dem obigen, vorschlagsgemäßen Verfahren, die geeignet sind, das vorschlagsgemäße System zu beschreiben, darf in vollem Umfange verwiesen werden.

Nach einer weiteren Lehre gemäß Anspruch 15, der ebenfalls eigenständige Bedeutung zukommt, wird die Verwendung des obigen, vorschlagsgemäßen Systems zur Werkstückvermessung beansprucht.

Wesentlich ist hier die Erkenntnis, dass die Bearbeitungsmaschine mit dem in die Spindel-Wechselschnittstelle eingewechselten Laser-Interferometer genutzt werden kann, um die Geometrie von unbearbeiteten oder schon bearbeiteten Werkstücken zu vermessen. Hierfür ist es erforderlich, die mindestens eine Meßoptik, hier insbesondere den mindestens einen Reflektor, an den relevanten Stellen am Werkstück zu positionieren. Hierdurch wird eine besonders weitreichende Doppelnutzung von Komponenten, insbesondere des Laser-Interferometers sowie der Maschinenachsen erreicht, was im Ergebnis zu einer ganz besonders kosteneffektiven Anordnung führt.

Im Folgenden wird die Erfindung anhand einer lediglich Ausführungsbeispiele darstellenden Zeichnung näher erläutert. In der Zeichnung zeigt
- Fig. 1: eine fünfachsige Bearbeitungsmaschine in Gantry-Bauweise zur Durchführung eines vorschlagsgemäßen Verfahrens mit schematisch dargestellten Meßrichtungen für die Linear- und Diagonalmessung,
- Fig. 2: die Bearbeitungsmaschine gemäß Fig. 1 mit schematischer Darstellung von Meßpositionen für eine Tracker-Messung,
- Fig. 3: die Bearbeitungsmaschine gemäß Fig. 1 bei der Werkstückvermessung und
- Fig. 4: das Laser-Interferometer eines vorschlagsgemäßen Systems zur Maschinenvermessung in einer ganz schematischen Darstellung.

Die in der Zeichnung dargestellte Bearbeitungsmaschine ist so konfiguriert, dass sie als solche ein System zur Maschinenvermessung bildet.

Von ihrem grundsätzlichen Aufbau her ist die Bearbeitungsmaschine eine fünfachsige Vertikalmaschine in Gantry-Bauweise. Bei dem bevorzugten Ausführungsbeispiel weist die Bearbeitungsmaschine ein stationäres Portal 1 und einen verfahrbaren Querträger 2 auf. Grundsätzlich sind zahlreiche andere Bauweisen von Werkzeugmaschinen für die Umsetzung des vorschlagsgemäßen Verfahrens anwendbar.

Die Bearbeitungsmaschine ist als NC-Bearbeitungsmaschine ausgestaltet. Entsprechend verfügt sie über eine NC-Steuerung, die mit entsprechenden Wegaufnehmern an den jeweiligen Achsen zusammenwirkt.

Für die Realisierung einer fünfachsigen Bewegung weist die Bearbeitungsmaschine drei NC-Linearachsen 4, 5, 6 sowie zwei NC-Schwenkachsen 7, 8 auf. Dabei sind die zwei, hier orthogonal zueinander angeordneten NC-Schwenkachsen 7, 8 dem Maschinenkopf 3 zugeordnet, der hier und vorzugsweise als Gabelkopf ausgestaltet ist.

Ferner ist in der Zeichnung ein feststehender Maschinentisch 9 dargestellt. Denkbar ist auch, dass der Maschinentisch 9 motorisch verstellbar ist und einen Teil der linearen Verfahrbarkeit oder der Schwenkbarkeit bereitstellt.

Der Maschinenkopf 3 ist mit einer mechanischen sowie elektrischen, in der Zeichnung lediglich angedeuteten Spindel-Wechselschnittstelle 10 zur Aufnahme einer nicht dargestellten Motorspindel ausgestattet, was vorliegend von besonderer Bedeutung ist. Dies wird weiter unten erläutert.

Zur Maschinenvermessung ist ein Laser-Interferometer 11 mit Strahlerzeuger 12 und Strahldetektor 13 vorgesehen. Solche Laser-Interferometer sind grundsätzlich bekannt. Mit ihnen lassen sich Entfernungsänderungen sehr genau erfassen. Das Prinzip dieser Entfernungsmessung basiert stets auf der Interferenz eines am Meßobjekt reflektierten Meßstrahls mit einem Referenz-Meßstrahl. Die bekannteste Umsetzung eines solchen Laser-Interferometers ist das Michelson-Interferometer, bei dem am Meßobjekt ein sogenannter Retro-Reflektor angeordnet ist. Dieser Retro-Reflektor sorgt dafür, dass ausgesendeter und reflektierter Strahl zueinander parallel versetzt sind und erst im Interferometer über eine Optik zur Interferenz gebracht werden. Denkbar ist aber auch, dass der Meßstrahl am Meßobjekt in sich selbst reflektiert wird.

Die vorschlagsgemäße Lösung ist mit allen Arten von Laser-Interferometern umsetzbar. Hier und vorzugsweise sind der Strahlerzeuger 12 und der Strahldetektor 13 in einem gemeinsamen Gehäuse 14 untergebracht, das weiter vorzugsweise im Wesentlichen identisch zu dem Gehäuse der Motorspindel ausgebildet ist.

Zur Maschinenvermessung mittels des Laser-Interferometers 11 sind eine Reihe von Meßoptiken 15, hier Reflektoren 15 vorgesehen. Je nach Meßaufgabe kann eine unterschiedliche Anzahl und Anordnung von Reflektoren 15 vorgesehen sein.

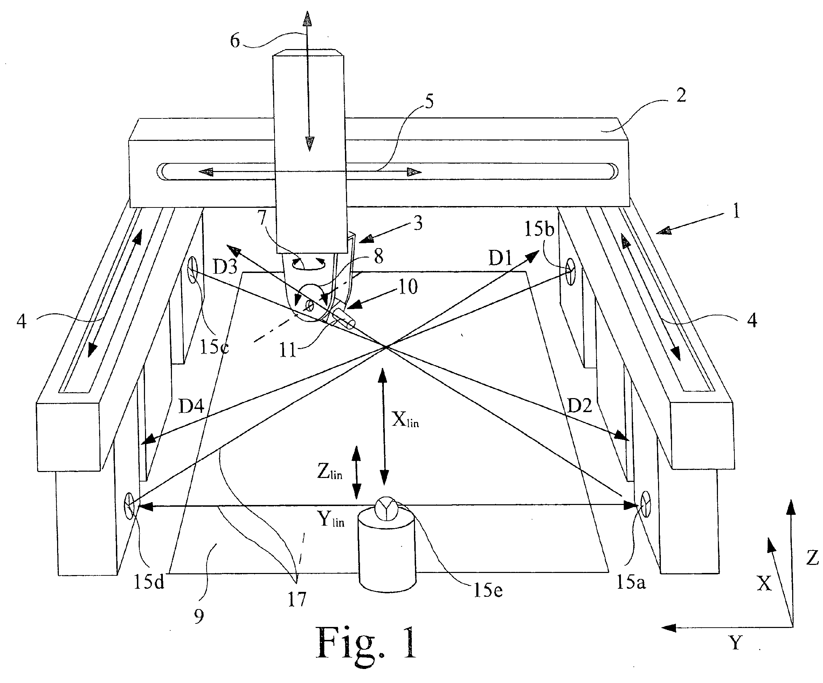

Bei der in Fig. 1 dargestellten Konfiguration sind insgesamt fünf Reflektoren 15a-15e vorgesehen, die am Rande des Arbeitsraums der Bearbeitungsmaschine angeordnet sind.

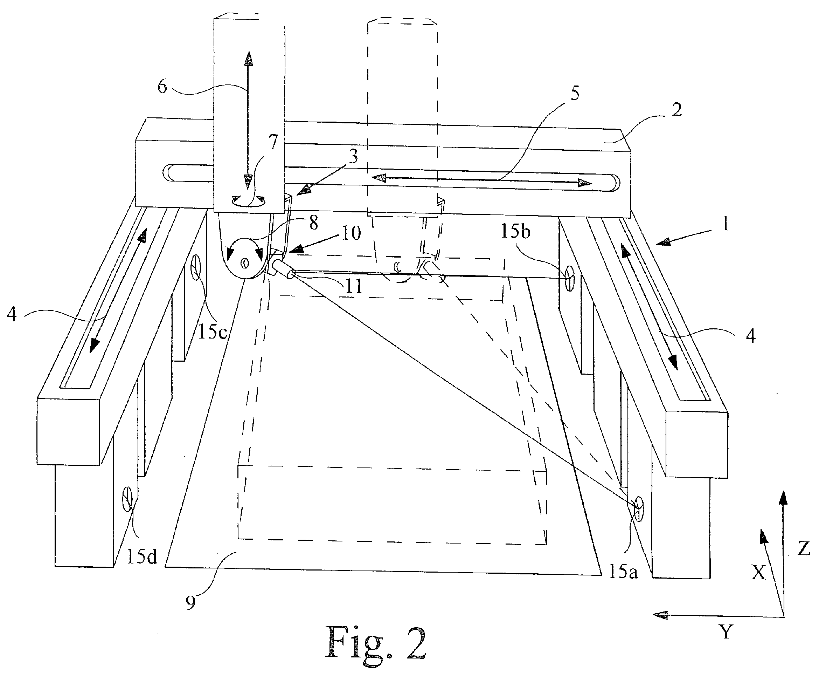

Bei dem in Fig. 2 dargestellten Ausführungsbeispiel ist die Meßaufgabe so getroffen, dass auf den Reflektor 15e verzichtet werden kann.

Für den Fall einer automatisierten Maschinenvermessung ist es vorteilhafterweise vorgesehen, dass die Reflektoren 15 fest an der Bearbeitungsmaschine angeordnet sind. Gegebenenfalls ist dann eine Abdeckung oder dergleichen für den jeweiligen Reflektor 15 vorzusehen, die für die Maschinenvermessung entsprechend zu entfernen ist.

Interessant ist nun, dass das Laser-Interferometer 11 eine zu der Spindel-Wechselschnittstelle 10 korrespondierende, in der Zeichnung ebenfalls nur angedeutete Schnittstelle 16 aufweist, wobei in den Fig. 1 bis 3 das Laser-Interferometer 11 über die Spindel-Wechselschnittstelle 10 bereits gegen die Motorspindel eingewechselt ist und mittels der Maschinenachsen 4-8 für die Laser-Interferenzmessungen ausrichtbar ist.

Das Ausrichten des Laser-Interferometers 11 in obigem Sinne umfaßt dabei vorzugsweise nicht nur Parallelverschiebungen des Meßstrahls, sondern auch Änderungen der Winkellage des Meßstrahls im Raum, wie im allgemeinen Teil der Beschreibung erläutert wurde.

Ein Blick auf die Zeichnung verrät, dass aufgrund der Fünfachsigkeit und insbesondere der Ausgestaltung des Maschinenkopfs 3 mit zwei NC-Schwenkachsen 7, 8 neue Freiheitsgrade für die Umsetzung von Meßaufgaben entstehen. Dies wurde im allgemeinen Teil der Beschreibung erläutert.

Ähnliche Vorteile lassen sich erreichen, wenn der Maschinenkopf 3 nur eine einzige NC-Schwenkachse 7, 8 aufweist, die vorzugsweise mittels eines Gabelkopfes realisiert ist. Dabei ist die Schwenkachse 7, 8 vorzugsweise so ausgelegt, dass durch ihre Ansteuerung ein Ausrichten des Laser-Interferometers 11 in obigem Sinne möglich ist.

Grundsätzlich lässt sich das vorschlagsgemäße Verfahren aber auch vorteilhaft auf eine Bearbeitungsmaschine anwenden, die im Maschinenkopf 3 keine NC-Schwenkachse aufweist.

Um die weiter oben angesprochenen Freiheitsgrade bei der Auslegung der Meßaufgaben auch bei den beiden letztgenannten Ausgestaltungen zu erreichen, ist es vorzugsweise vorgesehen, dass die mindestens eine Meßoptik 15 an einem Maschinentisch angeordnet ist bzw. sind, der in einer Schwenkachse oder in zwei Schwenkachsen schwenkbar ist.

Wesentlich für das vorschlagsgemäße Verfahren ist nun die Tatsache, dass zur Maschinenvermessung das Laser-Interferometer 11 über die Spindel-Wechselschnittstelle 10 gegen die Motorspindel eingewechselt und mittels der Maschinenachsen 4-8 für die Laser-Interferenzmessungen ausgerichtet wird. Das Einwechseln des Laser-Interferometers 11 erfolgt vorzugsweise automatisiert nach Art eines Spindelwechsels, wie ebenfalls noch erläutert wird. Grundsätzlich kann das Einwechseln des Laser-Interferometers 11 aber auch manuell erfolgen.

Im Zuge der Maschinenvermessung werden hier ganz allgemein Korrekturparameter ermittelt, die dem Positioniersystem der Bearbeitungsmaschine zugeführt werden. Dies kann auf unterschiedliche Weisen erfolgen. Bei einer besonders bevorzugten Ausgestaltung ist es so, dass die Korrekturparameter maschinenachsweise ermittelt werden und in den Meßwert des der jeweiligen Maschinenachse zugeordneten Wegaufnehmers eingemischt werden. Denkbar ist aber auch, dass die Korrekturparameter der Maschinensteuerung zugeführt und dort entsprechend im Zuge der Bahnplanung oder dergleichen berücksichtigt werden.

Fig. 1 zeigt schematisch die Durchführung einer Meßaufgabe, die Diagonalmessungen nach ISO 230-6 umfaßt. Hier wird davon ausgegangen, dass die Bearbeitungsmaschine drei lineare, orthogonal zueinander angeordnete Maschinenachsen 4, 5, 6 aufweist, was bei der dargestellten Bearbeitungsmaschine offensichtlich der Fall ist. Wesentlich ist nun, dass zur Maschinenvermessung in vorbestimmter Weise ein Teil der Laser-Interferenzmessungen im Arbeitsraum entlang der drei linearen Achsen 4, 5, 6 und ein Teil der Laser-Interferenzmessungen diagonal durch den Arbeitsraum vorgenommen werden.

Im Einzelnen ist es zunächst einmal vorgesehen, dass das Laser-Interferometer 11 auf einen der Reflektoren 15 ausgerichtet wird und anschließend unter Beibehaltung dieser Ausrichtung eine lineare Meßbahn 17 abfährt. Dabei ist die Meßbahn so vorgegeben, insbesondere programmiert, dass die Ausrichtung des Laser-Interferometers 11 auf den einen Reflektor 15 unverändert bleibt, ohne dass es einer sensorgestützten Nachführung bedarf.

Je nach Detailausgestaltung kann es vorgesehen sein, dass das Fahren auf der Meßbahn 17 zur Entfernungsmessung mindestens einmal, vorzugsweise zyklisch, angehalten wird. Denkbar ist aber auch, dass die Entfernungsmessungen dynamisch, also während des Abfahrens der Meßbahn 17 erfolgen. Die Korrekturparameter lassen sich hier aus den NC-Positionswerten und den interferometrisch gemessenen Entfernungswerten ermitteln. Mit "NC-Positionswert" ist jeweils der Positionswert gemeint, der in der NC-Steuerung als Basis für die Ansteuerung der jeweiligen Maschinenachse 4-8 vorliegt.

Es ergibt sich aus der Darstellung gemäß Fig. 1, dass jedenfalls drei Meßbahnen 17 entlang der drei linearen Achsen 4, 5, 6 und vier diagonale Meßbahnen 17 (D1-D4) vorgesehen sind.

Fig. 2 zeigt schematisch die Durchführung einer weiteren Meßaufgabe. Bei dieser weiteren Meßaufgabe wird der Maschinenkopf 3 auf eine Anzahl vorbestimmter Positionen im Arbeitsraum positioniert, die in Fig. 2 durch ein mit Strichlinien dargestelltes Volumen angedeutet sind.

Als Bezugspunkt dient hier vorzugsweise der Werkzeugbezugspunkt. Wesentlich ist hier, dass ein nicht dargestellter Sensor zur Erfassung der Abweichung in der Ausrichtung des Laser-Interferometers 11 auf die jeweilige Meßoptik 15, hier auf den jeweiligen Reflektor 15, vorgesehen ist. Solche Sensoren sind aus dem Bereich der Laser-Tracker bekannt geworden. Vorteilhafterweise findet hier ein optischer Positionssensor (PSD, Position Sensitive Detector) Anwendung, mit dem die zweidimensionale Position eines Lichtpunktes auf einem Sensorplättchen ermittelbar ist.

Vorschlagsgemäß ist es nun so, dass die Ausrichtung des Laser-Interferometers 11 basierend auf den Sensor-Meßwerten mittels der Maschinenachsen 4-8 jeweils nachgeregelt wird. Während der Positionierung des Maschinenkopfes 3 wird die Konfiguration der Maschinenachsen 4-8 also derart nachgeregelt, dass das Laser-Interferometer 11 auf den jeweiligen Reflektor 15 ausgerichtet bleibt. Die Korrekturparameter lassen sich dann aus den NC-Positionswerten und den interferometrisch gemessenen Entfernungswerten und/oder aus dem Nachregelvorgang ermitteln.

Es wurde schon darauf hingewiesen, dass eine automatisierte Maschinenvermessung mit dem vorschlagsgemäßen Verfahren ohne weiteres möglich ist. In besonders bevorzugter Ausgestaltung ist hierfür eine nicht dargestellte Parkstation vorgesehen, wobei das Laser-Interferometer 11 vor der Maschinenvermessung aus der Parkstation entnommen und in den Maschinenkopf 3 eingewechselt wird und wobei das Laser-Interferometer 11 nach Abschluss der Maschinenvermessung zurück in die Parkstation eingesetzt wird. In besonders bevorzugter Ausgestaltung erfolgt das Einwechseln automatisiert nach Art eines Spindelwechsels.

Es versteht sich, dass vor dem Einwechseln des Laser-Interferometers 11 die Motorspindel ausgewechselt werden muss. Hierfür ist vorzugsweise eine zweite, zu der Motorspindel korrespondierende Parkstation vorgesehen. Angesichts der Tatsache, dass die Motorspindel und das Laser-Interferometer 11 vorzugsweise zumindest in Teilen identische Schnittstellen aufweisen, können beide Parkstationen sogar identisch ausgestaltet sein.

In besonders bevorzugter Ausgestaltung weist die Parkstation eine elektrische und mechanische Wechselschnittstelle für das Laser-Interferometer 11 auf. Vorzugsweise ist es dabei so, dass vor Beginn der Maschinenvermessung das noch in der Parkstation befindliche Laser-Interferometer 11 über den elektrischen Teil der Wechselschnittstelle vorgeheizt wird. Damit kann das Vorheizen des Laser-Interferometers 11 beispielsweise schon zu einem Zeitpunkt erfolgen, in dem noch ein Bearbeitungsauftrag von der Bearbeitungsmaschine abgearbeitet wird.

Nach einer weiteren Lehre, der ebenfalls eigenständige Bedeutung zukommt, wird ein System zur Maschinenvermessung beansprucht. Wesentlich dabei ist, dass ein Laser-Interferometer 11 in obiger Weise in die Spindel-Wechselschnittstelle 10 eingesetzt und mittels der Maschinenachsen 4-8 für die Laser-Interferenzmessungen ausrichtbar ist. Insoweit darf zunächst auf die obigen Erläuterungen zu dem vorschlagsgemäßen Verfahren verwiesen werden.

Es hat sich als besonders vorteilhaft herausgestellt, dass die Bearbeitungsmaschine in Gantry-Bauart ausgeführt ist, wobei das Laser-Interferometer 11 zur Maschinenvermessung mittels der mindestens fünf Maschinenachsen 4-8 ausrichtbar ist. Grundsätzlich können hier aber auch andere Maschinenarten Anwendung finden.

Interessant ist vorliegend auch die Ausgestaltung der Spindel-Wechselschnittstelle 10 bzw. der dazu korrespondierenden Schnittstellen 16 der Motorspindel und des Laser-Interferometers 11. Vorschlagsgemäß ist es vorgesehen, dass der elektrische Teil der Spindel-Wechselschnittstelle 10, der zur elektrischen Versorgung und/oder Ansteuerung und/oder Überwachung der Motorspindel dient, während der Maschinenvermessung, also bei eingewechseltem Laser-Interferometer 11, zur elektrischen Versorgung und/oder Ansteuerung und/oder Überwachung des Laser-Interferometers 11 dient. Der elektrische Teil der Spindel-Wechselschnittstelle 10 wird entsprechend doppelt genutzt, was unter Kostengesichtspunkten besonders vorteilhaft ist.

Ähnliches gilt für den mechanischen Teil der Spindel-Wechselschnittstelle 10. Dabei ist der mechanische Teil der Spindel-Wechselschnittstelle 10, der zur mechanischen Fixierung der Motorspindel dient, während der Maschinenvermessung, also bei eingewechseltem Laser-Interferometer 11, zur mechanischen Fixierung des Laser-Interferometers 11 vorgesehen. Entsprechend wird auch der mechanische Teil der Spindel-Wechselschnittstelle 10 vorteilhafterweise doppelt genutzt.

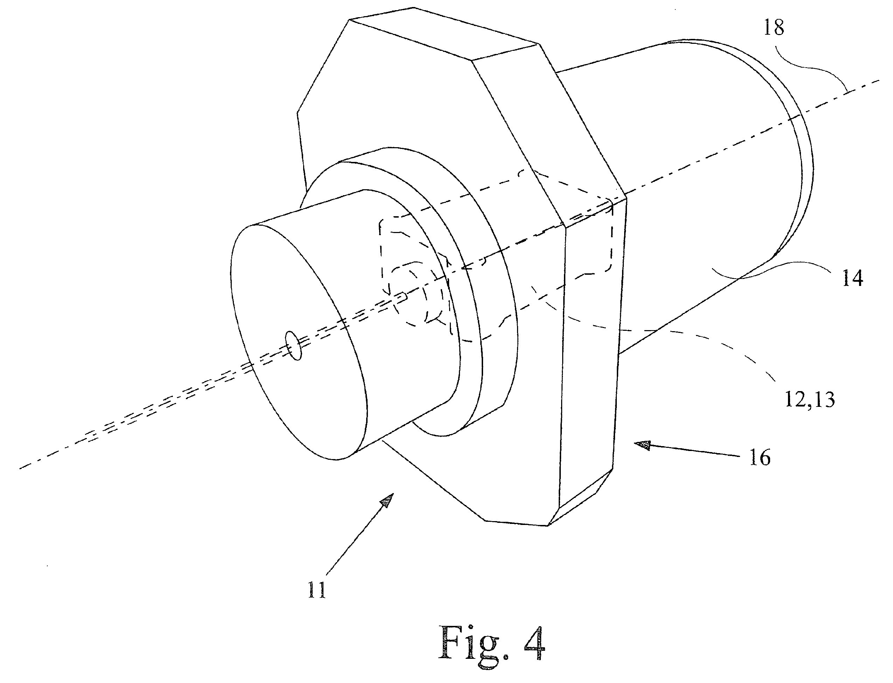

Fig. 4 zeigt die Ausrichtung des Meßstrahls des Laser-Interferometers 11 auf die geometrische Spindelachse 18, die in Fig. 4 ebenfalls angedeutet ist. Grundsätzlich ist es aber auch denkbar, dass der Meßstrahl senkrecht zu der geometrischen Spindelachse 18 ausgerichtet ist. Bei der dargestellten Vertikal-Bearbeitungsmaschine ist die letztgenannte Variante vorteilhaft, da die in den Fig. 1 und 2 dargestellten Meßaufgaben in Achs-Konfigurationen erfolgen können, in denen die NC-Schwenkachsen 7, 8 nur geringfügig aus ihrer Mittelstellung heraus ausgelenkt werden müssen.

Nach einer weiteren Lehre, der ebenfalls eigenständige Bedeutung zukommt, wird die Verwendung des oben beschriebenen Systems für die Werkstückvermessung beansprucht. Es ist erkannt worden, dass die Bearbeitungsmaschine selbst mit einfachen Maßnahmen als Meßmaschine für die Werkstückvermessung genutzt werden kann.

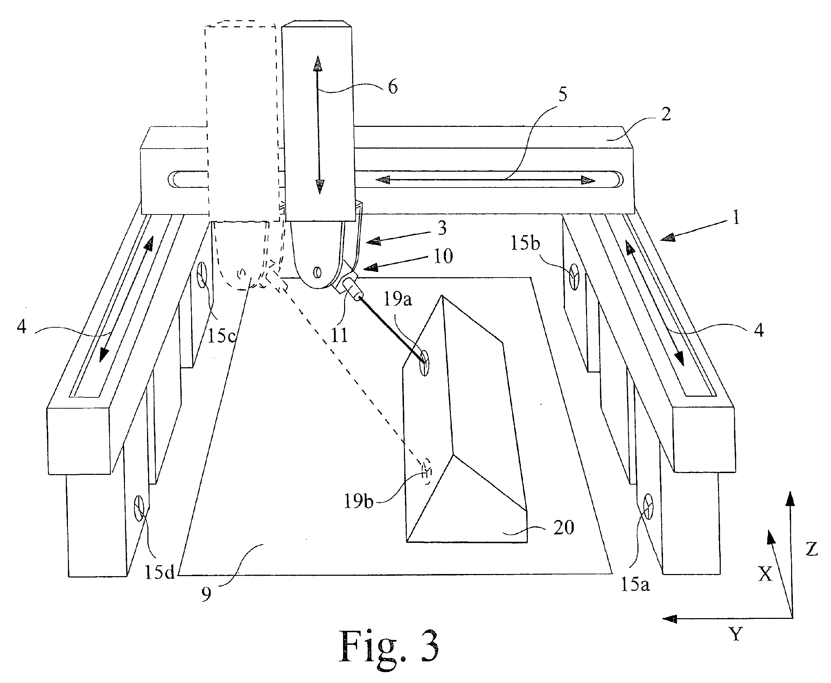

Wesentlich nach dieser weiteren Lehre ist, dass mindestens eine Meßoptik 19, hier mindestens ein Reflektor 19, am Werkstück 20 positioniert wird, wobei zur Werkstückvermessung stets auf eine Meßoptik 19 ausgerichtete Laser-Interferenzmessungen, insbesondere Entfernungsmessungen, durchgeführt werden und wobei zur Werkstückvermessung das Laser-Interferometer 11 über die Spindel-Wechselschnittstelle 10 gegen die Motorspindel eingewechselt wird und mittels der Maschinenachsen 4-8 für die Laser-Interferenzmessungen ausgerichtet wird (Fig. 3). Die interessierenden geometrischen Werkstückdaten lassen sich aus aus den interferometrisch gemessenen Entfernungswerten sowie aus den NC-Positionswerten ableiten.

In besonders bevorzugter Ausgestaltung arbeitet die Bearbeitungsmaschine bei der Werkstückvermessung nach Art eines Laser-Trackers. Entsprechend ist es auch hier zunächst vorgesehen, dass der Maschinenkopf 3 auf eine Anzahl vorbestimmter Positionen im Arbeitsraum positioniert wird.

Ferner ist auch hier ein weiter oben beschriebener Sensor zur Erfassung der Abweichung in der Ausrichtung des Laser-Interferometers 11 auf die jeweilige Meßoptik 19, hier auf den jeweiligen Reflektor 19, am Werkstück 20 vorgesehen, wobei die Ausrichtung des Laser-Interferometers 11 basierend auf den Sensor-meßwerten mittels der Maschinenachsen 4-8 jeweils nachgeregelt wird. Die Werkstückparameter lassen sich dann vorzugsweise aus den interferometrisch gemessenen Entfernungswerten sowie aus den NC-Positionswerten und/oder aus dem Nachregelvorgang ermitteln.

## Patentansprüche

1. Verfahren zur Maschinenvermessung einer NC-Bearbeitungsmaschine, wobei ein Laser-Interferometer (11) mit Strahlerzeuger (12) und Strahldetektor (13) sowie mindestens eine mit dem Laser-Interferometer (11) zusammenwirkende, insbesondere als Reflektor ausgestaltete Messoptik (15) vorgesehen sind und wobei zur Maschinenvermessung stets auf eine Messoptik (15) ausgerichtete Laser-Interferenzmessungen, insbesondere Entfernungsmessungen, durchgeführt werden, **dadurch gekennzeichnet,**
- **dass** die Bearbeitungsmaschine einen insbesondere als Gabelkopf ausgestalteten Maschinenkopf (3) aufweist, wobei dem Maschinenkopf (3) eine mechanische sowie elektrische Spindel-Wechselschnittstelle (10) zur Aufnahme einer Motorspindel zugeordnet ist,
- **dass** das Laser-Interferometer (11) zur Maschinenvermessung gegen die Motorspindel über eine zu der Spindel-Wechselschnittstelle (10) korrespondierende Schnittstelle (16) in den Maschinenkopf (3) eingewechselt wird und
- **dass** das gegen die Motorspindel eingewechselte Laser-Interferometer (11) über die dem Maschinenkopf (3) zugeordnete Spindel-Wechselschnittstelle (10) und mittels der Maschinenachsen (4-8) für die Laser-Interferenzmessungen ausgerichtet wird.

2. Verfahren nach Anspruch 1, **dadurch gekennzeichnet, dass** beim Ausrichten des Laser-Interferometers (11) mittels der Maschinenachsen (4-8) jedenfalls auch die Winkellage des dem Laser-Interferometer (11) zugeordneten Messstrahls im Raum eingestellt wird.

3. Verfahren nach Anspruch 1 oder 2, **dadurch gekennzeichnet, dass** der Maschinenkopf (3) mindestens eine NC-Schwenkachse (7, 8) aufweist, die zur Ausrichtung des Laser-Interferometers (11) angesteuert wird, oder, dass der Maschinenkopf (3) zwei insbesondere orthogonal zueinander angeordnete NC-Schwenkachsen (7, 8) aufweist, die zur Ausrichtung des Laser-Interferometers (11) angesteuert werden.

4. Verfahren nach einem der vorhergehenden Ansprüche, **dadurch gekennzeichnet, dass** im Zuge der Maschinenvermessung Korrekturparameter ermittelt werden, die dem Positioniersystem der Bearbeitungsmaschine zugeführt werden.

5. Verfahren nach einem der vorhergehenden Ansprüche, **dadurch gekennzeichnet, dass** die Bearbeitungsmaschine drei lineare, orthogonal zueinander angeordnete Maschinenachsen (4-6) aufweist und dass zur Maschinenvermessung in vorbestimmter Weise ein Teil der Laser-Interferenzmessungen im Arbeitsraum entlang der drei linearen Achsen (4-6) und ein Teil der Laser-Interferenzmessungen diagonal durch den Arbeitsraum vorgenommen werden, vorzugsweise, dass die Korrekturparameter aus den NC-Positionswerten und den interferometrisch gemessenen Entfernungswerken ermittelt werden.

6. Verfahren nach einem der vorhergehenden Ansprüche, **dadurch gekennzeichnet, dass** zur Maschinenvermessung der Maschinenkopf (3) auf eine Anzahl vorbestimmter Positionen im Arbeitsraum positioniert wird, dass ein Sensor zur Erfassung der Abweichung in der Ausrichtung des Laser-Interferometers (11) auf die jeweilige Messoptik (15) vorgesehen ist und dass die Ausrichtung des Laser-Interferometers (11) basierend auf den Sensormesswerten mittels der Maschinenachsen jeweils nachgeregelt wird, vorzugsweise, dass die Korrekturparameter aus den NC-Positionswerten und den interferometrisch gemessenen Entfernungswerten und/oder aus dem Nachregelvorgang ermittelt werden.

7. Verfahren nach einem der vorhergehenden Ansprüche, **dadurch gekennzeichnet, dass** eine Parkstation vorgesehen ist und dass das Laser-Interferometer (11) vor der Maschinenvermessung aus der Parkstation entnommen und in den Maschinenkopf (3) eingewechselt wird und dass das Laser-Interferometer (11) nach Abschluss der Maschinenvermessung in die Parkstation eingesetzt wird, vorzugsweise, dass das Einwechseln automatisiert nach Art eines Spindelwechsels erfolgt.

8. Verfahren nach Anspruch 7, **dadurch gekennzeichnet, dass** die Parkstation eine elektrische und mechanische Wechselschnittstelle für das Laser-Interferometer (11) aufweist und dass vor Beginn der Maschinenvermessung das noch in der Parkstation befindliche Laser-Interferometer (11) über den elektrischen Teil der Wechselschnittstelle vorgeheizt wird.

9. System zur Maschinenvermessung einer NC-Bearbeitungsmaschine, insbesondere zur Durchführung eines Verfahrens nach einem der vorhergehenden Ansprüche, wobei ein Laser-Interferometer (11) mit Strahler-zeuger (12) und Strahldetektor (13) sowie mindestens eine mit dem Laser-Interferometer (11) zusammenwirkende, insbesondere als Reflektor ausgestaltete Messoptik (15) vorgesehen sind und wobei zur Maschinenvermessung stets auf eine Messoptik (15) ausgerichtete Laser-Interferenzmessungen, insbesondere Entfernungsmessungen, durchführbar sind, **dadurch gekennzeichnet,**
- **dass** die Bearbeitungsmaschine einen insbesondere als Gabelkopf ausgestalteten Maschinenkopf (3) aufweist, wobei dem Maschinenkopf (3) eine mechanische sowie elektrische Spindel-Wechselschnittstelle (10) zur Aufnahme einer Motorspindel zugeordnet ist,
**dass** zur Maschinenvermessung das Laser-Interferometer (11) über eine Spindel-Wechselschnittstelle (10) gegen die Motorspindel in den Maschinenkopf (3) eingewechselt ist und
- **dass** das Laser-Interferometer (11) eine zu der Spindel-Wechselschnittstelle (10) korrespondierende Schnittstelle aufweist und mittels der Maschinenachsen (4-8) für die Laser-Interferenzmessungen ausrichtbar ist.

10. System nach Anspruch 9, **dadurch gekennzeichnet, dass** der Maschinenkopf (3) mindestens eine NC-Schwenkachse (7, 8) aufweist, die zur Ausrichtung des Laser-Interferometers (11) ansteuerbar ist, oder, dass der Maschinenkopf (3) zwei insbesondere orthogonal zueinander angeordnete NC-Schwenkachsen (7, 8) aufweist, die zur Ausrichtung des Laser-Interferometers (11) ansteuerbar sind.

11. System nach Anspruch 9 oder 10, **dadurch gekennzeichnet, dass** die Bearbeitungsmaschine mindestens fünfachsig in Gantry-Bauart ausgeführt ist und dass das Laser-Interferometer (11) zur Maschinenvermessung mittels der mindestens fünf Maschinenachsen (4-8) positionierbar ist.

12. System nach einem der Ansprüche 9 bis 11, **dadurch gekennzeichnet, dass** der elektrische Teil der Spindel-Wechselschnittstelle (10), der zur elektrischen Versorgung und/oder Ansteuerung und/oder Überwachung der Motorspindel dient, während der Maschinenvermessung zur elektrischen Versorgung und/oder Ansteuerung und/oder Überwachung des Laser-Interferometers (11) dient.

13. System nach einem der Ansprüche 9 bis 12, **dadurch gekennzeichnet, dass** der mechanische Teil der Spindel-Wechselschnittstelle (10), der zur mechanischen Fixierung der Motorspindel dient, während der Maschinenvermessung zur mechanischen Fixierung des Laser-Interferometers (11) dient.

14. System nach einem der Ansprüche 9 bis 13, **dadurch gekennzeichnet, dass** der Messstrahl des Laser-Interferometers (11) auf die geometrische Spindelachse (18) ausgerichtet ist, oder, dass der Messstrahl des Laser-Interferometers (11) senkrecht zu der geometrischen Spindelachse (18) ausgerichtet ist.

15. Verwendung des Systems nach einem der Ansprüche 9 bis 14 zur Werkstückvermessung, wobei die mindestens eine Messoptik (19), insbesondere der mindestens eine Reflektor (19), am Werkstück (20) positioniert wird, wobei zur Werkstückvermessung stets auf eine Messoptik (19) ausgerichtete Laser Interferenzmessungen, insbesondere Entfernungsmessungen, durchgeführt werden und wobei zur Werkstückvermessung das Laser-Interferometer (11) über die Spindel-Wechselschnittstelle (10) gegen die Motorspindel eingewechselt wird und mittels der Maschinenachsen (4-8) für die Laser-Interferenzmessungen positioniert wird.

16. Verwendung nach Anspruch 15, **dadurch gekennzeichnet, dass** zur Werkstückvermessung der Maschinenkopf (3) auf eine Anzahl vorbestimmter Positionen im Arbeitsraum positioniert wird, dass ein Sensor zur Erfassung der Abweichung in der Ausrichtung des Laser-Interferometers (11) auf die jeweilige Meßoptik (19) am Werkstück (20) vorgesehen ist und dass die Ausrichtung des Laser-Interferometers (11) basierend auf den SensorMesswerten mittels der Maschinenachsen (4-8) jeweils nachgeregelt wird, vorzugsweise, dass die Werkstückparameter aus den NC-Positionswerten und den interferometrisch gemessenen Entfernungswerten und/oder aus dem Nachregelvorgang ermittelt werden.

## Claims

1. A method for machine measurement of an NC processing machine, wherein a laser interferometer (11) having a beam generator (12) and beam detector (13) is provided, as well as at least one measuring optics (15) which interacts with the laser interferometer (11) and is especially formed as a reflector, and wherein laser interference measurements that are always aligned with measurement optics (15) are carried out for machine measurement, especially distance measurements, **characterized in that**
- the processing machine comprises a machine head (3) which is especially formed as a fork head, wherein the machine head (3) is associated with a mechanical and electrical spindle changing interface (10) for accommodating a motor spindle,
- the laser interferometer (11) is substituted in the machine head (3) for the motor spindle via an interface (16) corresponding to the spindle changing interface (10) for machine measurement, and
- the laser interferometer (11) substituted for the motor spindle is aligned via the spindle changing interface (10) associated with the machine head (3) and by means of the machine axes (4 to 8) for the laser interference measurements.

2. A method according to claim 1, **characterized in that** the angular position of the measurement beam in space, which beam is associated with the laser interferometer (11), is respectively also set during the alignment of the laser interferometer (11) by means of the machine axes (4 to 8).

3. A method according to claim 1 or 2, **characterized in that** the machine head (3) comprises at least one NC pivoting axis (7, 8), which is driven for the alignment of the laser interferometer (11), or that the machine head (3) comprises two NC pivoting axes (7, 8) which are especially arranged orthogonally with respect to each other and which are driven for the alignment of the laser interferometer (11).

4. A method according to one of the preceding claims, **characterized in that** corrective parameters are determined in the course of the machine measurement, which are supplied to the positioning system of the processing machine.

5. A method according to one of the preceding claims, **characterized in that** the processing machine comprises three linear machine axes (4 to 6) which are arranged orthogonally with respect each other, and that some of the laser interference measurements for machine measurement are carried out in a predetermined manner in the working space along the three linear axes (4 to 6), and some of the laser interference measurements are carried out diagonally through the working space, preferably that the corrective parameters are determined from the NC position values and the distance values measured interferometrically.

6. A method according to one of the preceding claims, **characterized in that** the machine head (3) is positioned at a number of predetermined positions in the working space for machine measurement, a sensor is provided for detection of the discrepancy in the alignment of the laser interferometer (11) to the respective measuring optics (15), and the alignment of the laser interferometer (11) is respectively readjusted by means of the machine axes on the basis of the measured sensor values, preferably that the corrective parameters are determined from the NC position values and the distance values measured interferometrically, and /or from the readjusting process.

7. A method according to one of the preceding claims, **characterized in that** a parking station is provided, and the laser interferometer (11) is taken from the parking station before the machine measurement and is substituted in the machine head (3), and the laser interferometer (11) is inserted into the parking station after completion of the machine measurement, preferably that the substitution occurs in an automated way in the manner of a spindle change.

8. A method according to claim 7, **characterized in that** the parking station has an electrical and mechanical changing interface for the laser interferometer (11), and before the start of the machine measurement, the laser interferometer, which is still located in the parking station, is preheated via the electrical part of the changing interface.

9. A system for machine measurement of an NC processing machine, especially for carrying out a method according to one of the preceding claims, wherein a laser interferometer (11) with a beam generator (12) and a beam detector (13) is provided, as well as at least one measuring optics (15) which interacts with the laser interferometer (11) and is especially formed as a reflector, and wherein laser interference measurements that are always aligned with measurement optics (15) are carried out for machine measurement, especially distance measurements, **characterized in that**
- the processing machine comprises a machine head (3) which is especially formed as a fork head, wherein the machine head (3) is associated with a mechanical and electrical spindle changing interface (10) for accommodating a motor spindle,
- the laser interferometer (11) is substituted in the machine head (3) for the motor spindle via a spindle changing interface (10) for machine measurement, and
- the laser interferometer (11) comprises an interface corresponding to the spindle changing interface (10) and can be aligned by means of the machine axes (4 to 8) for the laser interference measurements.

10. A system according to claim 9, **characterized in that** the machine head (3) comprises at least one NC pivoting axis (7, 8), which can be driven for the alignment of the laser interferometer (11), or the machine head (3) comprises two NC pivoting axes (7, 8) which are aligned orthogonally with respect to each other and can be driven for the alignment of the laser interferometer (11).

11. A system according to claim 9 or 10, **characterized in that** the processing machine is formed with at least five axes in the form of a gantry, and the laser interferometer (11) can be positioned by means of the at least five machine axes (4 to 8).

12. A system according to one of the claims 9 to 11, **characterized in that** the electrical part of the spindle changing interface (10), which is used for the electrical supply and/or driving and/or monitoring of the motor spindle, is used during machine measurement for the electrical supply and/or driving and/or monitoring of the laser interferometer (11).

13. A system according to one of the claims 9 to 12, **characterized in that** the mechanical part of the spindle changing interface (10), which is used for mechanical fixing of the motor spindle, is used during machine measurement for the mechanical fixing of the laser interferometer (11).

14. A system according to one of the claims 9 to 13, **characterized in that** the measurement beam of the laser interferometer (11) is aligned to the geometric spindle axis (18), or the measurement beam of the laser interferometer (11) is aligned perpendicularly to the geometric spindle axis.

15. The use of the system according to one of the claims 9 to 14 for the measurement of workpieces, wherein the at least one measurement optics (19), especially the at least one reflector (19), is positioned on the workpiece (20), wherein laser interference measurements, which are always directed at measurement optics (19), are carried out for a workpiece measurement, especially distance measurements, and wherein the laser interferometer (11) is substituted for the motor spindle via the spindle changing interface (10) for workpiece measurement and is positioned by means of the machine axes (4 to 8) for the laser interference measurements.

16. The use according to claim 15, **characterized in that** the machine head (3) is positioned at a number of predetermined positions in the working space for workpiece measurement, a sensor is provided for detecting the discrepancy in the alignment of the laser interferometer (11) with the respective measurement optics (19) on the workpiece (20), and the alignment of the laser interferometer (11) is respectively readjusted by means of the machine axes (4 to 8) based on the measured sensor values, preferably that the workpiece parameters are determined from the NC position values and the distance values measured interferometrically, and/or from the readjustment process.

## Revendications

1. Procédé pour le mesurage d'une machine d'usinage à commande numérique, dans lequel un interféromètre laser (11) avec générateur de faisceau (12) et détecteur de faisceau (13) et au moins une optique de mesure (15) coopérant avec l'interféromètre laser (11), en particulier conformée comme un réflecteur, sont prévus et dans lequel, en vue du mesurage de la machine, des mesures d'interférométrie laser, en particulier des mesures de distance, toujours dirigées vers une optique de mesure (15), sont effectuées, **caractérisé en ce que**
- la machine d'usinage présente une tête de machine (3) conformée en particulier comme une tête de fourche, laquelle tête de machine (3) est associée à une interface d'échange de broche (10) mécanique et électrique destinée à recevoir une broche de moteur,
- **en ce que** l'interféromètre laser (11) pour la mesure de la machine est échangé contre la broche du moteur sur une interface (16) correspondant à l'interface d'échange de broche (10) dans la tête de machine (3) et
- **en ce que** l'interféromètre laser (11) échangé contre la broche du moteur est orienté à l'aide de l'interface d'échange de broche (10) associée à la tête de machine (3) ou au moyen des axes (4-8) de la machine en vue des mesures d'interférométrie par laser.

2. Procédé selon la revendication 1, **caractérisé en ce que** lors de l'orientation de l'interféromètre laser (11) au moyen des axes (4-8) de la machine, la position angulaire du faisceau de mesure associé à l'interféromètre laser (11) dans l'espace est ajustée dans tous les cas.

3. Procédé selon la revendication 1 ou 2, **caractérisé en ce que** la tête de machine (3) comprend au moins un axe de pivotement à commande numérique (7, 8) qui est commandé en vue de l'alignement de l'interféromètre laser (11) ou **en ce que** la tête de machine (3) présente deux axes de pivotement à commande numérique (7, 8) en particulier perpendiculaires l'un à l'autre, qui sont commandés en vue de l'orientation de l'interféromètre laser (11).

4. Procédé selon l'une des revendications précédentes, **caractérisé en ce qu'**au cours du mesurage de la machine, des paramètres de correction sont déterminés et transmis au système de positionnement de la machine d'usinage.

5. Procédé selon l'une des revendications précédentes, **caractérisé en ce que** la machine d'usinage présente trois axes de machine linéaires orthogonaux (4-6) et **en ce qu'**en vue du mesurage de la machine, une partie des mesures d'interférométrie par laser est réalisée de manière prédéterminée dans l'espace de travail le long des trois axes (4-6) linéaires et une partie des mesures d'interférométrie par laser en diagonale à travers l'espace de travail, de préférence de telle manière que les paramètres de correction soient déterminés à partir des valeurs de position de la commande numérique et des valeurs de distance mesurées par interférométrie.

6. Procédé selon l'une des revendications précédentes, **caractérisé en ce qu'**en vue du mesurage de la machine, la tête de machine (3) est positionnée dans un certain nombre de positions définies dans l'espace de travail, **en ce qu'**un capteur est prévu pour détecter la déviation dans l'orientation de l'interféromètre laser (11) vers l'optique de mesure (15) en question et **en ce que** l'orientation de l'interféromètre laser (11) est ajustée sur la base des valeurs de mesure du capteur au moyen des axes de la machine, de préférence de telle sorte que les paramètres de correction soient obtenus à partir des valeurs de position de la commande numérique et des valeurs de distance mesurées par interférométrie et/ou à partir du processus d'ajustement.

7. Procédé selon l'une des revendications précédentes, **caractérisé en ce qu'**une position de repos est prévue et **en ce que** l'interféromètre laser (11) est enlevé avant le mesurage de la machine à partir de la position de repos et échangé dans la tête de machine (3) et **en ce que** l'interféromètre laser (11) est inséré après la fin du mesurage de la machine dans la position de repos, de préférence de telle manière que l'échange s'effectue de manière automatisée comme un changement de broche.

8. Procédé selon la revendication 7, **caractérisé en ce que** la position de repos présente une interface d'échange électrique et mécanique pour l'interféromètre laser (11) et **en ce qu'**avant le début du mesurage de la machine, l'interféromètre laser (11) qui se trouve dans la position de repos est préchauffé par la partie électrique de l'interface d'échange.

9. Système pour le mesurage d'une machine d'usinage à commande numérique, en particulier pour la réalisation d'un procédé selon l'une des revendications précédentes, dans lequel un interféromètre laser (11) avec générateur de faisceau (12) et détecteur de faisceau (13) et au moins une optique de mesure (15) coopérant avec l'interféromètre laser (11), en particulier conformée comme un réflecteur, sont prévus et dans lequel, en vue du mesurage de la machine, des mesures d'interférométrie laser, en particulier des mesures de distance, toujours dirigées vers une optique de mesure (15) sont effectuées, **caractérisé en ce que**
- la machine d'usinage présente une tête de machine (3) conformée en particulier comme une tête de fourche, laquelle tête de machine (3) est associée à une interface d'échange de broche (10) mécanique et électrique destinée à recevoir une broche de moteur,
- **en ce que** l'interféromètre laser (11) pour le mesurage de la machine est échangé contre la broche du moteur sur une interface correspondant à l'interface d'échange de broche (10) dans la tête de machine (3) et
- **en ce que** l'interféromètre laser (11) présente une interface correspondant à l'interface d'échange de broche (10) et peut être orienté au moyen des axes (4-8) de la machine en vue des mesures d'interférométrie par laser.

10. Système selon la revendication 9, **caractérisé en ce que** la tête de machine (3) présente au moins un axe de pivotement à commande numérique (7, 8) qui peut être commandé pour orienter l'interféromètre laser (11) ou **en ce que** la tête de machine (3) présente deux axes de pivotement à commande numérique (7, 8) en particulier perpendiculaires l'un à l'autre, peuvent être commandés en vue de l'orientation de l'interféromètre laser (11).

11. Système selon la revendication 9 ou 10, **caractérisé en ce que** la machine d'usinage est construite en portique avec au moins cinq axes et **en ce que** l'interféromètre laser (11) peut être positionné, en vue du mesurage de la machine, au moyen des au moins cinq axes (4-8) de la machine.

12. Système selon l'une des revendications 9 à 11, **caractérisé en ce que** la partie électrique de l'interface d'échange de broche (10) servant à l'alimentation électrique et/ou à l'activation et/ou à la surveillance de la broche du moteur sert à l'alimentation électrique et/ou à l'activation et/ou à la surveillance de l'interféromètre laser (11) pendant le mesurage de la machine.

13. Système selon l'une des revendications 9 à 12, **caractérisé en ce que** la partie mécanique de l'interface d'échange de broche (10) servant à la fixation mécanique de la broche du moteur sert à la fixation mécanique de l'interféromètre laser (11) pendant le mesurage de la machine.

14. Système selon l'une des revendications 9 à 13, **caractérisé en ce que** le faisceau de mesure de l'interféromètre laser (11) est orienté vers l'axe de broche géométrique (18) ou **en ce que** le faisceau de mesure de l'interféromètre laser (11) est orienté perpendiculairement à l'axe de broche géométrique (18).

15. Utilisation du système selon l'une des revendications 9 à 14 pour le mesurage d'une pièce d'oeuvre, dans laquelle l'au moins une optique de mesure (19), en particulier l'au moins un réflecteur (19), est positionnée sur la pièce d'oeuvre (20), des mesures d'interférométrie par laser, en particulier des mesures de distance, toujours dirigées vers l'optique de mesure (19) étant effectuées pour le mesurage de la pièce d'oeuvre, et dans laquelle, en vue du mesurage de la pièce d'oeuvre, l'interféromètre laser (11) est échangé contre la broche du moteur à l'aide de l'interface d'échange de broche (10) et positionné au moyen des axes (4-8) de la machine en vue des mesures d'interférométrie par laser.

16. Utilisation selon la revendication 15, **caractérisée en ce qu'**en vue du mesurage de la pièce d'oeuvre, la tête de machine (3) est positionnée dans un certain nombre de positions prédéterminées dans l'espace de travail, **en ce qu'**un capteur est prévu pour détecter la déviation dans l'orientation de l'interféromètre laser (11) vers l'optique de mesure (19) en question sur la pièce d'oeuvre (20) et **en ce que** l'orientation de l'interféromètre laser (11) est ajustée sur la base des valeurs de mesure du capteur au moyen des axes (4-8) de la machine, de préférence de telle manière que les paramètres de la pièce d'oeuvre soient obtenus à partir des valeurs de position de la commande numérique et des valeurs de distance mesurées par interférométrie et/ou à partir du processus d'ajustement.
